# EUROPÄISCHE PATENTANMELDUNG

(11) **EP 4 056 039 A1**
(43) Veröffentlichungstag der Anmeldung: **14.09.2022**
(21) Anmeldenummer: 22159500.2
(22) Anmeldetag: 01.03.2022
(51) Int. Cl.: A21B 3/04

(54) **BACKOFEN MIT SCHWADENAPPARAT**

(30) Priorität: 08.03.2021 DE 102021105551
(71) Anmelder: MIWE Michael Wenz GmbH, 97450 Arnstein (DE)
(72) Erfinder: Hettrich, Andreas, 97450 Schwebenried (DE); Schmitt, Mathias, 97450 Büchold (DE); Fuller, Carsten, 97225 Zellingen (DE)
(74) Vertreter: Freischem & Partner Patentanwälte mbB

(57) **Zusammenfassung**

Die Erfindung betrifft ein Gargerät, insbesondere einen Backofen, mit
- mindestens einer Wasserzufuhrvorrichtung (18),
- einer Mehrzahl von übereinander angeordneten, wasserführenden Wärmeübertragungselementen, die eine wasserführende Fläche (30) und jeweils mindestens ein Durchlaufloch (32, 33) in der wasserführenden Fläche (30) für den Durchtritt von Wasser zu einem darunterliegenden Wärmeübertragungselement aufweisen,
- und mindestens einer Haltevorrichtung (15) zur lösbaren Befestigung der Wärmeübertragungselemente im Gargerät.

Aufgabe der Erfindung ist es, ein gattungsgemäßes Gargerät derart fortzubilden, dass der Schwadenapparat (13) möglichst einfach und fehlerfrei aus dem Gargerät entnehmbar und wiedereinsetzbar ist. Weiterhin soll der Schwadenapparat (13) möglichst leicht zu reinigen sein und den Dampfschwaden möglichst effizient erzeugen.

Diese Aufgabe wird dadurch gelöst, dass zumindest mehrere Wärmeübertragungselemente eine vorgegebene Ausrichtung aufweisen und die Geometrie der Wärmeübertragungselemente auf die Geometrie im Bereich der Haltevorrichtung (15) derart abgestimmt ist, dass jedes dieser Wärmeübertragungselement nur in der vorgegebenen Ausrichtung im Backofen befestigbar ist.

## Beschreibung

Die Erfindung betrifft ein Gargerät, insbesondere einen Backofen, mit einem Schwadenapparat.

Das Gargerät weist mindestens eine Wasserzufuhrvorrichtung, eine Mehrzahl von übereinander angeordneten, wasserführenden Wärmeübertragungselementen und mindestens eine Haltevorrichtung zur lösbaren Befestigung der Wärmeübertragungselemente im Gargerät auf. Die Wärmeübertragungselemente sind in die Haltevorrichtung einsetzbar und herausnehmbar und weisen mindestens ein Durchlaufloch für ein Hindurchlaufen von Wasser auf.

Das Gargerät weist üblicherweise ein Gehäuse mit einem Garraum zur Aufnahme eines Wagens und/oder mindestens eines Gargutträgers sowie eine Heizvorrichtung auf. Wenn das Gargerät als ein Backofen ausgebildet ist, umschließt ein Ofengehäuse einen Backraum, in den das Backgut z.B. mit einem Stikken eingebracht wird, sowie eine Heizvorrichtung auf. Zusätzlich kann ein derartiges Gargerät auch ein Gebläse aufweisen, um die erhitzte Atmosphäre umzuwälzen.

Ein derartiges Gargerät kann alternativ oder zusätzlich auch ein Dampfgarer oder ein Kombidämpfer sein.

Das Gargerät weist auch einen Schwadenapparat auf. Der Schwadenapparat erzeugt in dem Gargerät einen Dampfschwaden (Wasserdampf), der während des Garvorgangs auf die zu garenden Lebensmittel einwirkt. Durch das Einwirken des Schwadens wird das Backergebnis des in dem Backofen gebackenen Backguts positiv beeinflusst. Bei einem Kombidämpfer oder Heißluftdämpfer dient der Wasserdampf der Hitzezufuhr zum Garen der Lebensmittel.

Ein Backofen mit den vorstehenden Merkmalen ist beispielsweise bekannt aus der Druckschrift US 4 984 557 A. Bei diesem Backofen ist der in dem Ofengehäuse befindliche Backraum über eine Tür zugänglich und dazu vorgesehen, einen Backgut tragenden Wagen aufzunehmen. Der Backofen weist zwei seitliche Luftkanäle auf, die sich über der Höhe des Backraums erstrecken und jeweils durch eine Trennwand mit einer Vielzahl von Luftdurchtrittsöffnungen vom Backraum getrennt sind. Die Luftkanäle werden während eines Backvorgangs abwechselnd von einem Gebläse mit von einer Heizvorrichtung erhitzter Luft gespeist. Die heiße Luft wird durch einen Schwadenapparat befeuchtet und wird nach Durchströmen des Backraums erneut von dem Gebläse angesaugt.

Der in der US 4 984 557 A beschriebene Schwadenapparat ist in den seitlichen Luftkanälen angeordnet. Er weist eine Platte auf, welche parallel zu der seitlichen Trennwand der Backkammer angeordnet ist. An der Platte sind mehrere gegeneinander geneigte Rinnen für daran entlanglaufendes Wasser angeschweißt. Wenn ein Dampfschwaden erzeugt werden soll, wird Wasser durch ein Rohr auf die oberste Rinne geleitet. Das Wasser fließt dann mäanderförmig entlang der zueinander geneigten Rinnen herab. Durch den heißen Luftstrom, der durch den Schwadenapparat strömt, und die hohe thermische Masse der Platte und der Rinnen geht viel Wärme auf das Wasser über und es kann ein Dampfschwaden erzeugt werden. Insgesamt weist der Schwadenapparat eine hohe thermische Masse auf, für dessen Aufwärmen viel Energie benötigt wird. Die Rinnen sind nicht entnehmbar, so dass eine Reinigung aufwändig ist.

Ein weiterer Backofen mit einem Schwadenapparat ist beispielsweise in der Druckschrift EP 1 384 406 B9 offenbart. Bei diesem Backofen ist der Schwadenapparat ebenfalls in einem von dem Backraum abgetrennten Bereich des Backofens positioniert. Er weist eine Mehrzahl von als Wannen bezeichnete Rinnen auf, welche horizontal und zueinander parallel übereinander an einer Haltevorrichtung angeordnet sind. In den Rinnen sind längliche, in Batterien zusammengefasste Stangen angeordnet, die als thermische Masse dienen. Die Stangen sind durch Abstandshalter voneinander getrennt gehalten. In den Böden der einzelnen Rinnen sind Durchlauflöcher vorgesehen, um ein Hindurchfließen von Wasser durch den Boden der Rinne in eine darunter liegende Rinne zu ermöglichen. Die thermische Masse des Schwadenapparates wird durch die Heißluftströmung im Backofen erwärmt. Wenn der Dampfschwaden erzeugt werden soll, wird Wasser zur obersten Rinne zugeführt und fließt an der erwärmten thermischen Masse entlang. Da die Rinnen horizontal angeordnet sind, ist ein vollständiges Abfließen des Wassers aus den Rinnen schwierig und es können Wasserreste in den Rinnen verbleiben, die zu einer Verunreinigung der Rinnen führen.

Aufgabe der Erfindung ist es, ein gattungsgemäßes Gargerät, insbesondere einen Backofen, derart fortzubilden, dass der Schwadenapparat möglichst einfach und fehlerfrei aus dem Gargerät entnehmbar und wiedereinsetzbar ist. Weiterhin soll der Schwadenapparat möglichst leicht zu reinigen sein und den Dampfschwaden möglichst effizient erzeugen.

Die Aufgabe wird mit einem Gargerät, insbesondere einem Backofen, mit der Gesamtheit der Merkmale des Patentanspruchs 1 gelöst.

Das Gargerät umfasst einen Schwadenapparat mit
- mindestens einer Wasserzufuhrvorrichtung,
- einer Mehrzahl von übereinander angeordneten, wasserführenden Wärmeübertragungselementen, die eine wasserführende Fläche und jeweils mindestens ein Durchlaufloch in der wasserführenden Fläche für den Durchtritt von Wasser zu einem darunterliegenden Wärmeübertragungselement aufweisen,
- und mindestens einer Haltevorrichtung zur lösbaren Befestigung der Wärmeübertragungselemente im Gargerät.

Im Folgenden wird das erfindungsgemäße Gargerät exemplarisch anhand eines Backofens beschrieben. Wie bereits erwähnt, kann das Gargerät aber auch jedes andere Gerät sein, das einen Dampferzeuger benötigt, beispielsweise ein Kombidämpfer.

Zur Lösung der obigen Aufgabe weisen zumindest mehrere Wärmeübertragungselemente eine vorgegebene Ausrichtung auf und die Geometrie der Wärmeübertragungselemente ist derart auf die Geometrie im Bereich der Haltevorrichtung abgestimmt, dass jedes dieser Wärmeübertragungselement nur in der vorgegebenen Ausrichtung im Backofen befestigt werden kann.

Mit anderen Worten werden Formen der Wärmeübertragungselemente und der damit zusammenwirkenden Haltevorrichtung gewählt, die eine Befestigung der Wärmeübertragungselemente nur in der vorbestimmten Ausrichtung zulassen. Anders ausgedrückt ist an jeder Position, an der ein Wärmeübertragungselement einsetzbar ist, dieses in einer für diese Position spezifischen Ausrichtung einsetzbar.

Dies ist beispielsweise dann von Bedeutung, wenn die Wärmeübertragungselemente asymmetrisch ausgebildet sind. Beispielsweise kann das Durchlaufloch in der wasserführenden Fläche, d.h. in der Bodenfläche, nur an einem Ende der Wärmeübertragungselemente in Längsrichtung vorgesehen sein. Zusätzlich oder alternativ kann die wasserführende Fläche der in der Haltevorrichtung angeordneten Wärmeübertagungselemente eine vorgegebene Neigung gegenüber einer Waagerechten aufweisen. Durch die vorgegebene Ausrichtung kann eine Fließrichtung für das Wasser entlang der Bodenfläche vorgegeben werden. Dadurch, dass die Wärmeübertragungselemente nicht in der falschen Ausrichtung in der Haltevorrichtung angeordnet werden können, ist stets gewährleistet, dass sie mit der richtigen Fließrichtung für das Wasser befestigt sind und die optimale Funktion des Schwadenapparates gewährleistet ist.

Wenn beispielsweise der Schwadenapparat fünf übereinander angeordnete, identische Wärmeübertragungselemente mit jeweils einem Durchlaufloch an nur einem Ende aufweist, können das oberste und das dritte Wärmeübertragungselement von oben eine erste Ausrichtung und das zweite und das vierte Wärmeübertragungselement von oben eine entgegengesetzte zweite Ausrichtung aufweisen. Entsprechend der Ausrichtung kann beispielsweise eine Fließrichtung für das Wasser entlang der Wärmeübertragungselemente und Durchlauflöcher vorgegeben sein. Das unterste Wärmeübertragungselement kann in der Praxis ohne Durchlaufloch gefertigt sein und muss keine besondere Ausrichtung aufweisen. Hier kann sich das noch nicht verdampfte Wasser sammeln.

Die Wärmeübertragungselemente sind im Wesentlichen geometrisch identisch. Für die Reinigung sind sie aus der Haltevorrichtung entnehmbar und wieder einsetzbar. Beim Einsetzen können die Wärmeübertragungselemente vertauscht werden. Dabei ist gewährleistet, dass alle Wärmeübertragungselemente nach dem Einsetzen die vorbestimmte Neigung aufweisen und sich die vorbestimmte Fließrichtung für das Wasser ergibt.

Es ist natürlich auch möglich, mehrere Haltevorrichtungen und sogar für jedes Wärmeübertragungselement eine separate Haltevorrichtung im Backofen anzuordnen.

In der Praxis kann die mindestens eine Haltevorrichtung Halteelemente aufweisen, an denen Befestigungselemente der Wärmeübertragungselemente befestigt werden können. Die Geometrien der Halteelemente und der Befestigungselemente können komplementär zueinander ausgebildet sein.

Die Befestigungselemente können im Bereich von zwei Endabschnitten der Wärmeübertragungselemente in Längsrichtung vorgesehen sein, wobei sich die Geometrie der Befestigungselemente am ersten Endabschnitt von der Geometrie der Befestigungselemente am zweiten Endabschnitt unterscheidet. Die damit zusammenwirkenden Halteelemente haben ebenfalls unterschiedliche Geometrien, so dass die Wärmeübertragungselemente in nur in der vorbestimmten Ausrichtung in der Haltevorrichtung anbringbar sind.

Die Befestigungselemente können beispielsweise zapfenartig, stabartig, plattenartig, bolzenartig, hakenartig oder auch ringartig ausgebildet sein und beispielsweise in Längsrichtung oder in Querrichtung der Wärmeübertragungselemente orientiert von den Endabschnitten abstehen. Sie wirken mit komplementär geformten Halteelementen der dem Wärmeübertragungselement zugeordneten Haltevorrichtung zusammen. Insgesamt ist die Geometrie der Wärmeübertragungselemente mit den Befestigungselementen und die Geometrie der Haltevorrichtung also in Längsrichtung der Wärmeübertragungselemente asymmetrisch. Die vorgegebene Ausrichtung der Wärmeübertragungselemente erschließt sich dem Monteur auf einen Blick.

Zusätzlich oder alternativ zu den Befestigungselementen an den Endabschnitten können auch Befestigungselemente an einer Seite etwa in der Mitte der Wärmeübertragungselemente vorgesehen sein, welche mit einem Halteelement der Haltevorrichtung zusammenwirken.

In der Praxis können die Wärmeübertragungselemente mit den Befestigungselementen einstückig ausgebildet sein. Alternativ können die Befestigungselemente jedoch auch separate Teile sein, die an die Wärmeübertragungselemente angefügt sind. Hierdurch können Herstellungskosten reduziert und die Flexibilität der Verwendung der Wärmeübertragungselemente erhöht werden. Beispielsweise können die Wärmeübertragungselemente als U-förmiges Strangpressprofil gefertigt werden, an dem Stirnwände mit den Wärmeübertragungselementen befestigt werden.

Die Verbindungen der Befestigungselemente mit den Halteelementen der Haltevorrichtung sind insbesondere formschlüssig und/oder kraftschlüssig ausgebildet. Somit sind die Verbindungen einfach wieder lösbar und die Wärmeübertragungselemente aus dem Backofen entnehmbar. Hierfür sind die Halteelemente der Haltevorrichtung geometrisch komplementär auf die Befestigungselemente abgestimmt. Wenn die Befestigungselemente von den Endabschnitten der Wärmeübertragungselemente abstehen, dann sind die Halteelemente als komplementär geformte Aussparungen oder Aufnahmen in der Haltevorrichtung ausgebildet.

In der Praxis kann die wasserführende Bodenfläche der an der Haltevorrichtung befestigten Wärmeübertragungselemente eine vorgegebene Neigung aufweisen. Mit anderen Worten werden Formen der Wärmeübertragungselemente und der damit zusammenwirkenden Haltevorrichtung gewählt, durch die die Wärmeübertragungselemente in der vorgegebenen Ausrichtung eine vorgegebene Neigung der jeweiligen wasserführenden Flächen gegenüber einer Waagerechten aufweisen.

Die wasserführende Fläche kann entlang der Längsrichtung geneigt sein, so dass das Wasser in Längsrichtung zu einem Ende der Wärmeübertragungselemente fließen kann. An diesem Ende kann das Durchlaufloch sein, durch das das Wasser zum darunter liegenden Wärmeübertragungselement strömt. Es kann aber auch ein weiteres Durchlaufloch vor dem unteren Ende der wasserführenden Fläche vorgesehen sein. Dadurch wird die Benetzung der unteren Wärmeübertragungselemente beschleunigt. Die Neigung der wasserführenden Fläche der Wärmeübertragungselemente und das Durchlaufloch bewirken, dass sich keine Wasserstauung bildet und das von außen über die Wasserzufuhrvorrichtung zu dem obersten Wärmeübertragungselement zugeführte Wasser in vorbestimmter Weise entlang der Wärmeübertragungselemente strömt.

Die Neigung der wasserführenden Fläche kann beispielsweise dadurch realisiert sein, dass die Wärmeübertragungselemente selbst eine zu einem oberen, waagerechten Rand der Wärmeübertragungselemente geneigte wasserführende Fläche aufweisen. Bei waagerechter Ausrichtung des oberen Randes der Wärmeübertragungselemente in der Haltevorrichtung hat die wasserführende Fläche die vorgegebene Neigung.

Alternativ können die Wärmeübertragungselemente eine zu einem oberen Rand parallele wasserführende Fläche aufweisen. Die Neigung der wasserführenden Fläche kann dann dadurch realisiert sein, dass die Befestigungselemente mit einem Höhenversatz zueinander in der Haltevorrichtung befestigt werden. In diesem Fall verläuft die wasserführende Fläche im Wesentlichen parallel zu einer Geraden zwischen den zwei Befestigungselementen. Die komplementären Halteelemente der Haltevorrichtung können zu diesem Zweck in unterschiedlicher Höhe angeordnet sein. Die richtige Ausrichtung der Wärmeübertragungselemente, die in der Längsrichtung asymmetrisch sind, wird durch zwei Befestigungselemente mit unterschiedlichen Geometrien an ihren Enden sichergestellt.

In der Praxis können die Ausrichtung der übereinander angeordneten Wärmeübergangselemente und die Neigungsrichtung der wasserführenden Flächen alternieren. In diesem Fall fließt das Wasser im Wesentlichen mäanderförmig an den Wärmeübertragungselementen entlang, so dass es einen langen Fließweg in dem Schwadenapparat zurücklegt und effizient verdampft. Wenn die Wärmeübertragungselemente mehrere Durchlauflöcher aufweisen, wird eine besonders gleichmäßige Verteilung des durch die Durchlauflöcher hindurchfließenden Wassers und ein frühzeitiger Durchtritt von Wasser zu einem darunterliegenden Wärmeübertragungselement erreicht.

In der Praxis sind also an beiden Enden des Schwadenapparats vertikal aufeinander folgende Halteelemente angeordnet, die abwechselnd zur ersten und zur zweiten Geometrie komplementär sind. Dabei liegen jeweils Halteelemente mit unterschiedlichen Geometrien und einem leichten Höhenversatz einander gegenüber. Daraus ergibt sich das Alternieren der Neigungsrichtung der wasserführenden Bodenfläche und der meanderförmige Fließweg. Wie oben beschrieben, kann das unterste Wärmeübertragungselement frei von Löchern und ohne Neigung eingebaut sein.

Die Wärmeübertragungselemente können in der Praxis als Schwadenrinnen ausgebildet sein. Eine Schwadenrinne ist eine konkave längliche Rinne mit einem in Draufsicht länglichen, rechteckigen Boden und vier die Seiten des Bodens umfassenden Wänden. Die Wände formen somit eine gemeinsame, umlaufende Wandung der Schwadenrinne und weisen einen oberen Rand auf. An diesem oberen Rand ist die Schwadenrinne offen. Die im Einbauzustand nach oben weisende Bodenfläche ist die wasserführende Fläche der Schwadenrinne. Die wasserführende Fläche kann derart ausgebildet sein, dass die Fließgeschwindigkeit und/oder der Fließweg des Wassers für eine optimale Verdampfung optimiert ist. Beispielsweise kann die Bodenfläche Kanäle und/oder Stufen aufweisen, die den Wasserstrom verzögern. In der Bodenfläche der Schwadenrinne ist außerdem mindestens ein Durchlaufloch vorgesehen, nämlich vorzugsweise am tiefsten Ende der Bodenfläche des in der Haltevorrichtung befestigten Wärmeübertragungselements. Die stirnseitigen Wände, nachfolgend Stirnwände genannt, bilden den oben beschriebenen ersten Endabschnitt und zweiten Endabschnitt der Schwadenrinne.

Die Befestigungselemente können an den beiden Stirnwänden vorgesehen sein, wie vorstehend beschrieben. Die Befestigungselemente können insbesondere am oberen Rand der Stirnwand angeordnet und/oder stabartig, plattenartig, bolzenartig oder hakenartig von den zwei Stirnwänden der Schwadenrinne in entgegensetzten Richtungen vorragen. Natürlich können die Befestigungselemente auch im Bereich der zwei Stirnwände der Schwadenrinne nach unten vorragen. Wenn die zwei Befestigungselemente an den zwei Stirnwänden deutlich unterschiedliche Formen haben, lässt sich die vorgegebene Einbauposition jedes Wärmeübertragungselements auf einen Blick erfassen. Die Befestigungselemente können aber auch andere Positionen an der Schwadenrinne und/oder Orientierung aufweisen, solange entweder die Form der Befestigungselemente oder die Abstimmung der Form der Schwadenrinne auf die Form des Backofens im Bereich der Haltevorrichtung für die Schwadenrinne eine vorgegebene Befestigungsposition der Befestigungselemente und somit eine vorgegebene Ausrichtung der Schwadenrinne definieren. Dies lässt sich durch asymmetrische Befestigungselemente, durch schräge oder gewölbte Abschnitte der Kontur der Schwadenrinne oder durch einen Vorsprung im Bereich der Haltevorrichtung erreichen, der mit einer komplementären Ausnehmung in der Kontur der Schwadenrinne zusammenwirkt.

In der Praxis sind die oben beschriebenen Schwadenrinnen bevorzugt jeweils ein Metallgussteil und können mindestens eine darin einlegbare und herausnehmbare Einlage aufweisen. Metallgussteile haben eine hohe Wärmekapazität, eine gute Wärmeleitfähigkeit und sind kostengünstig industriell herstellbar. Bei Metallgussteilen lassen sich auch problemlos komplexe Geometrien realisieren.

Die Schwadenrinnen können aber auch auf andere Weise hergestellt sein, beispielsweise aus U-förmigen Strangpressprofilen, deren Enden mit Stirnwänden versehen sind oder aus Biegeteilen, deren Enden mit Stirnwänden versehen sind. Die Stirnwände können die Befestigungselemente aufweisen.

Die mindestens eine in die Schwadenrinnen einlegbare und herausnehmbare Einlage ist vorzugsweise aus Stahl gebildet. Die im Folgenden als Stahleinlagen bezeichneten Einlagen können die Fließgeschwindigkeit des Wassers beeinflussen. Zusätzlich oder alternativ können die Stahleinlagen den Weg, welchen das Wasser entlang der wasserführenden Fläche fließt, beeinflussen. Beispielsweise können längliche Stahleinlagen mit geringen Abständen zueinander in die Schwadenrinnen entlang ihrer Längsrichtung einlegbar und herausnehmbar sein. Die Stahleinlagen können die Fließgeschwindigkeit reduzieren und die Verweildauer des Wassers in der Schwadenrinne steigern. Ferner steigern die Stahleinlagen die wärmespeichernde Masse und die Kontaktfläche zu dem Wasser. Da sie entnehmbar sind, können die Stahleinlagen gereinigt und im Fall von Verschleiß ausgetauscht werden.

Die wasserführende Fläche der Schwadenrinne und die Stahleinlagen können geometrisch komplementär zueinander ausgebildet sein. Die Stahleinlagen sind dann leicht in vorgegebener Lage in die Schwadenrinne einlegbar.

In der Praxis können die Wärmeübertragungselemente an einer nicht wasserführenden Seite Extrusionen zum schnellen Aufheizen aufweisen. Extrusionen sind vorspringende oder vorragende Abschnitte der Wärmeübertragungselemente, die von der Ofenatmosphäre umströmt werden, wenn die Wärmeübergangselemente in der umgewälzten Ofenatmosphäre angeordnet sind. Diese Extrusionen können insbesondere an einem mittleren Abschnitt der länglichen Wärmeübertragungselemente, welcher die beiden Endabschnitte verbindet, vorgesehen sein. Hierdurch wird die Grenzfläche zwischen den Wärmeübertragungselementen und der Ofenatmosphäre erhöht, so dass insgesamt die Wärmeübertragung von der Ofenatmosphäre auf die Wärmeübertragungselemente verbessert wird.

Wie erwähnt, können die Wärmeübertragungselemente jeweils mehrere Durchlauflöcher aufweisen. Beispielsweise können etwa ab der Mitte der Wärmeübertragungselemente Durchlauflöcher angeordnet sein. Durch mehrere Durchlauflöcher in jedem Wärmeübertragungselement wird eine schnellere Benetzung des darunter liegenden Wärmeübertragungselements erreicht.

Durch Variation der Durchmesser der Durchlauflöcher eines Wärmeübertragungselementes kann das Fließverhalten des Wassers gezielt beeinflusst werden. Die Durchlauflöcher können beispielsweise so ausgebildet sein, dass ihr Durchmesser in Fließrichtung des Wassers (also in Längsrichtung des geneigten Wärmeübertragungselements) zunimmt. Diese Ausbildung der Durchlauflöcher verhindert, dass ein Großteil des Wassers bereits durch das in Fließrichtung erste Durchlaufloch hindurchströmt. Es kann also eine möglichst gleichmäßige Verteilung des Wassers in den Wärmeübertragungselementen und dadurch ein möglichst effizientes Verdampfen des Wassers erreicht werden.

Die weiteren Merkmale der als Backofen ausgebildeten Garvorrichtung sind aus dem Stand der Technik bekannt. Eine Heizvorrichtung erhitzt die Ofenatmosphäre im Backraum. Die heiße Ofenatmosphäre wird entweder durch ein Gebläse oder durch natürliche Konvektion in dem Backraum bewegt. Bei Verwendung eines Gebläses befindet sich dieses in der Regel in dem Ofengehäuse außerhalb des Backraums und ist über Kanäle mit dem Backraum verbunden, welche die Ofenatmosphäre von dem Backraum zum Gebläse und von dem Gebläse zum Backraum führen. Die Heizvorrichtung kann ein Wärmetauscher in der Nähe des Gebläses sein. Der Wärmetauscher kann beispielsweise durch Rauchgas eines Brenner oder durch Thermoöl oder elektrisch beheizt werden.

Weitere praktische Ausführungsformen und Vorteile der Erfindung sind nachfolgend im Zusammenhang mit den Zeichnungen beschrieben. Es zeigen:
- Fig. 1: eine Vorderansicht eines erfindungsgemäßen Backofens,
- Fig. 2: eine geschnittene Darstellung des Backofens aus Fig. 1 mit Blick auf die Rückwand,
- Fig. 3: den Schwadenapparat des Backofens aus den Fig. 1 und Fig. 2 in einer Ansicht von vorne,
- Fig. 4: ein Wärmeübertragungselement des Schwadenapparates aus Fig. 3 in einer Ansicht von schräg oben,
- Fig. 5: das Wärmeübertragungselement aus Fig. 4, geschnitten entlang von Schnittebene A, in einer Ansicht von schräg oben,
- Fig. 6: das Wärmeübertragungselement aus Fig. 4, geschnitten entlang von Schnittebene B, in einer Ansicht von schräg oben,
- Fig. 7: eine Detailansicht des Schwadenapparates aus Fig. 3.

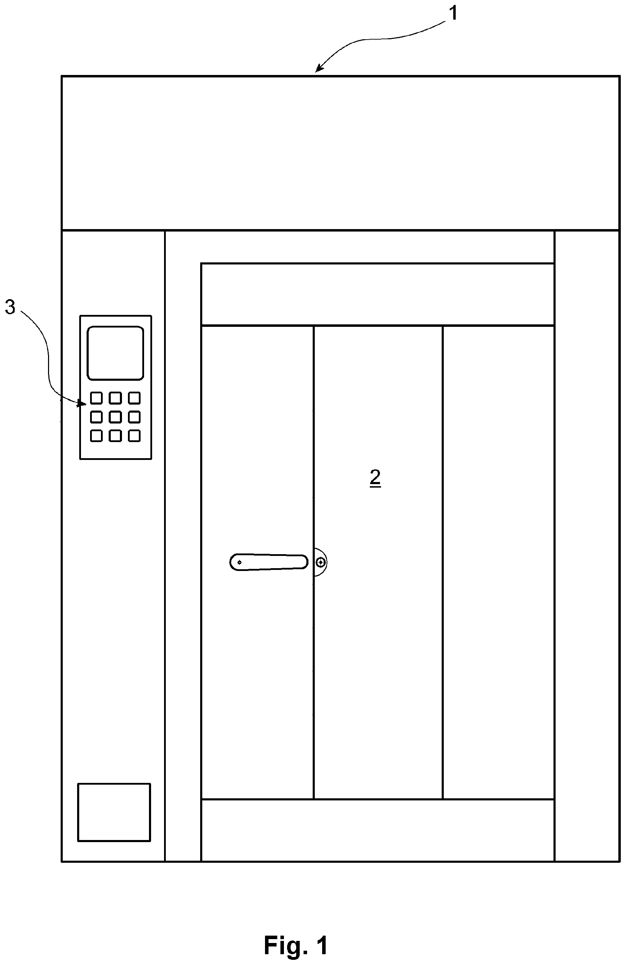

Die Fig. 1 zeigt einen erfindungsgemäßen Backofen, der üblicherweise in Bäckereien oder in Backwarenfabriken verwendet wird. Der Backofen umfasst ein Gehäuse 1 mit einer auf der Vorderseite des Backofens angeordneten Tür 2. Die Tür ist während des Backvorgangs verschlossen und kann zum Einbringen der Teiglinge und Entnehmen der Backwaren geöffnet werden. Beispielsweise können durch die Türöffnung bei geöffneter Tür 2 entweder Backbleche oder ein Backwagen, auch Stikken genannt, in den Backraum des Backofens eingeschoben werden. In Fig. 1 ist ferner ein Bedienfeld 3 mit einem Anzeigebildschirm zu erkennen. Über das Bedienfeld 3 können Parameter des Backvorgangs (z.B. Dauer, Temperatur, Beschwadung) eingegeben werden, welche anschließend zur Kontrolle über den Anzeigebildschirm des Bedienfelds 3 angezeigt werden.

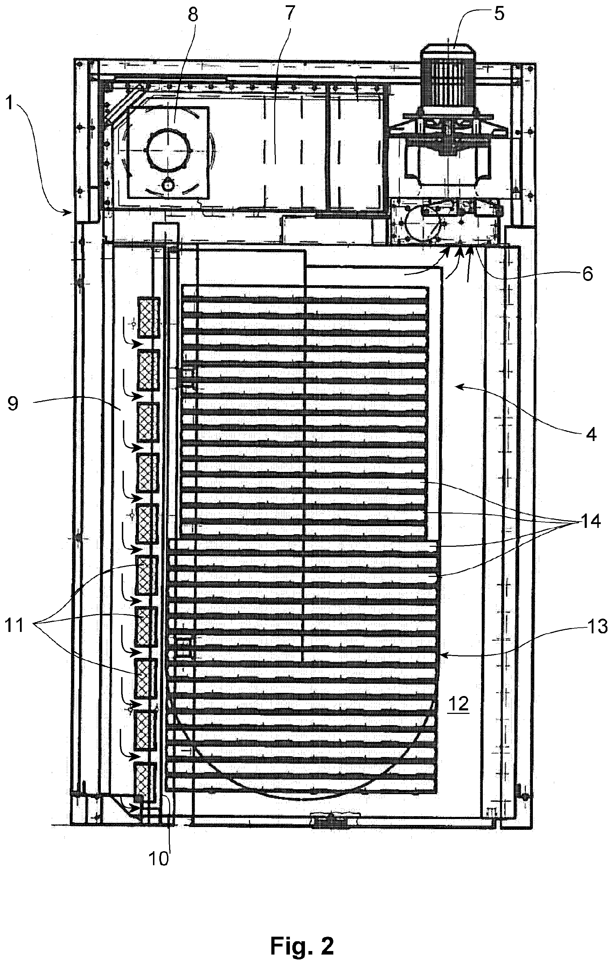

Die Fig. 2 zeigt eine Schnittdarstellung des Backofens, bei der die Vorderseite mit der Tür weggeschnitten ist. Es sind der Querschnitt des Backraums 4 sowie die wesentlichen für den Backbetrieb erforderlichen funktionalen Elemente zu erkennen. Oben rechts in dem Gehäuse 1 des Backofens ist ein Gebläse 5 zu erkennen. Dieses Gebläse 5 saugt die Ofenatmosphäre (im Wesentlichen Luft und Dampf) aus dem Backraum 4 durch dessen Deckwand 6 hindurch ab. Im Bereich der Deckwand 6 kann eine Drossel oder ein Schieber vorgesehen sein, um den Strömungsquerschnitt für die abgesaugte Ofenatmosphäre zu variieren und so die den Backwaren im Backraum 4 zugefügte Wärmemenge zu beeinflussen.

Von dem Gebläse 5 strömt die Ofenatmosphäre zu einer Heizvorrichtung. Die Heizvorrichtung besteht aus einem Heizregister 7, welches die Ofenatmosphäre durchströmt, und einem Brenner 8, welcher das Heizregister 7 erhitzt. Der Brenner 8 wird üblicherweise mit Öl oder Gas betrieben. Die so erhitzte Ofenatmosphäre strömt anschließend in einen Zufuhrkanal 9, der sich in dem in Fig. 2 links gezeigten Abschnitt des Ofengehäuses 1 befindet. Der Zufuhrkanal 9 erstreckt sich über die gesamte Höhe des Backraums 4 und grenzt an dessen linke Trennwand 10 an. Direkt neben der linken Trennwand 10 sind in dem Zufuhrkanal 9 Wärmespeicherelemente 11, beispielsweise Schamottsteine, angeordnet. Diese werden durch die erhitzte, daran vorbei und hindurchströmende Ofenatmosphäre auf deren Temperatur erhitzt, so dass die Ofenatmosphäre nach einem Öffnen und erneutem Schließen der Ofentür 2 schnell wieder die vorgesehene Temperatur erreicht. Die linke Trennwand 10 des Backraums 4 besteht aus einem Blech mit Durchbrüchen, welches das Eintreten der Ofenatmosphäre in den Backraum 4 ermöglicht.

An der in Fig. 2 zu erkennenden Rückwand 12 des Backraums 4 ist ein Schwadenapparat 13 mit mehreren vertikal beabstandeten Wärmeübertragungselementen 14 über die gesamte Höhe des Backraums 4 angeordnet. Die Wärmeübertragungselemente 14 werden von länglichen, im Querschnitt im Wesentlichen U-förmigen und nach oben offenen Schwadenrinnen gebildet.

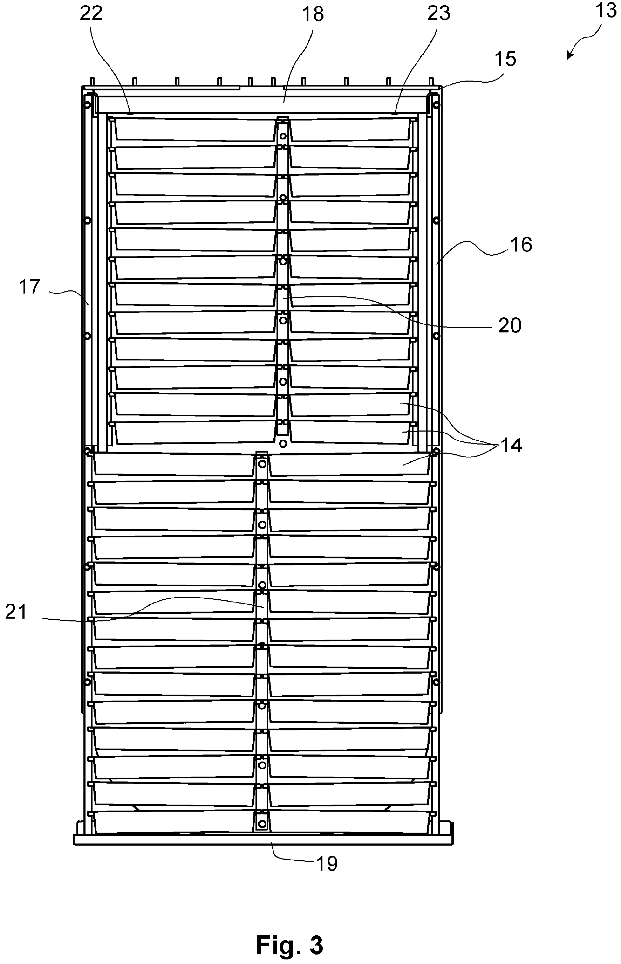

Wie anhand einer ersten Ausführungsform des Schwadenapparates 13 in Fig. 3 zu erkennen ist, können die Schwadenrinnen 14 unterschiedlich lang sein. Sie werden durch eine Haltevorrichtung 15 in ihrer jeweiligen Position und Ausrichtung gehalten. Die Haltevorrichtung wird durch einen Rahmen 15 gebildet, der zwei äußere vertikale Profile 16, 17 aus rostfreiem Stahl oder anderen Metallen aufweist. Zwischen den äußeren vertikalen Profilen 16, 17 erstrecken sich eine obere Einlaufrinne 18 und eine Auffangwanne 19 unterhalb des Schwadenapparats. Darüber hinaus sind zwischen den äußeren vertikalen Profilen 16, 17 zwei innere vertikale Profile 20, 21 vorgesehen, die im Wesentlichen mittig übereinander angeordnet sind. Der Abstand zwischen den inneren vertikalen Profilen 20, 21 zu den äußeren vertikalen Profilen 16, 17 in horizontaler Richtung entspricht ungefähr den Längen der Schwadenrinnen 14. Somit können immer zwei Schwadenrinnen 14 nebeneinander in der Haltevorrichtung 15 angeordnet sein. Die Haltevorrichtung 15 ist parallel zur Rückwand 12 des Backraums 4 angeordnet und mit dieser sowie mit dem Boden des Backraums 4 verbunden. Sie erstreckt sich im Wesentlichen über die gesamte Breite und Höhe der Rückwand 12 des Backraums 4. Wenn der Backofen mit dem Brenner 8 beheizt wird, kann die Rückwand 12 des Backraums 4 den Abgaskanal für die Abgase des Brenners 8 begrenzen. Die Abgase heizen in diesem Fall die Haltevorrichtung 15 und die darin angeordneten Schwadenrinnen 14 auf.

In die vertikalen Profile 16, 17, 20, 21 der Haltevorrichtung 15 sind die Schwadenrinnen 14 herausnehmbar eingehängt. Wie in Fig. 3 zu erkennen ist, sind die Schwadenrinnen 14 in eingehängtem Zustand im Wesentlichen äquidistant zueinander positioniert und sie weisen eine leichte, alternierende Neigung gegenüber der Einlaufrinne 18 und der Auffangwanne 19 auf. Die Schwadenrinnen 14 sind somit gegenüber einer Waagerechten geneigt. Nebeneinander angeordnete Schwadenrinnen 14 weisen eine entgegengesetzte Neigungsrichtung auf. Für das Einhängen der Schwadenrinnen 14 in die Haltevorrichtung 15 weisen die Profile 16, 17, 20, 21 Halteelemente auf, auf welche weiter unten eingegangen wird.

Die Einlaufrinne 18, die oberhalb der Schwadenrinnen 14 angeordnet ist, bildet eine Wasserzufuhrvorrichtung. Sie ermöglicht die Zufuhr von Wasser zu den Schwadenrinnen 14 durch die beiden in der Figur dargestellten Wasseraustrittsöffnungen 22, 23. Das Wasser fließt von den Wasseraustrittsöffnungen 22, 23 zunächst auf die beiden obersten nebeneinander liegenden Schwadenrinnen 14. Das Wasser fließt dann entlang dieser Schwadenrinnen 14 in entgegengesetzten Richtungen und anschließend auf die darunter nächstliegenden Schwadenrinnen 14. Auf diese Weise fließt das Wasser entlang aller Schwadenrinnen 14 in Form von zwei entgegengesetzten Mäandern, wobei es schnell erhitzt wird und einen Dampfschwaden mit einem starken Schwadenstoß in dem Backraum 4 erzeugt, der das Backergebnis positiv beeinflusst. Das eingebrachte Wasser, das nach dem Durchlaufen der untersten Schwadenrinne 14 nicht bereits verdampft ist, fließt in die Auffangwanne 19, in der es aufgefangen wird. Natürlich können in der Einlaufrinne 18 auch weitere Wasseraustrittsöffnungen vorgesehen sein, über die beispielsweise Wasser direkt in die Schwadenrinnen 14 in der unteren Hälfte der Haltevorrichtung 15 geleitet wird.

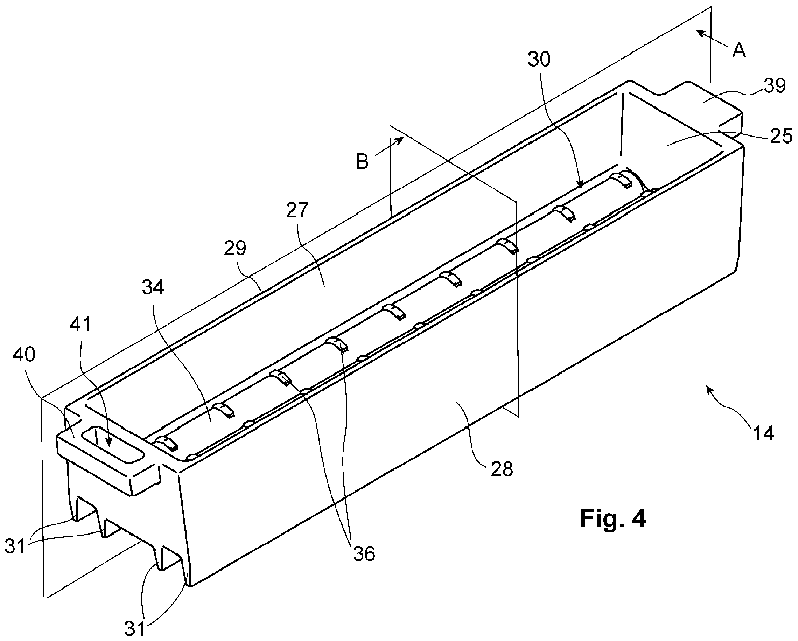

Die Fig. 4, Fig. 5 und Fig. 6 zeigen Detaildarstellungen einer Schwadenrinne 14 der ersten Ausführungsform des Schwadenapparates 13. Die Schwadenrinne 14 ist eine längliche konkave Rinne aus Metallguss mit einem in Draufsicht vierseitigen, rechteckigen Boden 24 und vier die Seiten des Bodens 24 umfassenden Wänden 25, 26, 27, 28, nämlich zwei die kurzen Seiten des Bodens 24 begrenzende Stirnwände 25, 26 und zwei die langen Seiten des Bodens 24 begrenzenden Seitenwände 27, 28. Als Metallgussteil ist die Schwadenrinne 14 kostengünstig und einstückig herstellbar.

Die Wände 25, 26, 27, 28 der Schwadenrinne 14 formen eine gemeinsame, den Boden 24 umschließende Wandung mit einem oberen Rand 29, an welchem die Schwadenrinne 14 offen ist. Die in die Richtung des oberen Randes 29 weisende Fläche des Bodens 24 ist die wasserführende Fläche 30 der Schwadenrinne 14. Der Boden 24 mit der wasserführenden Fläche 30 verläuft gemäß dieser Ausführungsform parallel zu dem horizontal verlaufenden, oberen Rand 29 der Schwadenrinne 14, so dass die Schwadenrinne 14 eine in Längsrichtung konstante Tiefe aufweist. Indem die Schwadenrinne 14 geneigt in die Haltevorrichtung 15 eingehängt wird, weist auch die wasserführende Fläche 30 eine Neigung auf, an der Wasser in Längsrichtung der Schwadenrinne 14 entlanglaufen kann.

Für ein schnelles Aufheizen der Schwadenrinne 14 durch eine die Schwadenrinne 14 im Backofen umströmende Ofenatmosphäre sind an der Unterseite des Bodens 24 Extrusionen 31 vorgesehen. Die Extrusionen sind als Rippen 31 ausgebildet, welche in Längsrichtung der Schwadenrinne 14 orientiert sind und von dem Boden 24 der Schwadenrinne 14 nach unten hervorragend. Hierdurch wird die Grenzfläche zwischen der Schwadenrinne 14 und der umgebenden Ofenatmosphäre vergrößert, so dass ein schnelles Aufwärmen der Schwadenrinne 14 möglich ist.

In dem Boden 24 sind ferner zwei nach unten hin verjüngte Durchlauflöcher 32, 33 vorgesehen, durch die Wasser aus der Schwadenrinne 14 herausfließen kann, um die darunter liegende Schwadenrinne zu füllen. In der hier gezeigten Ausführungsform ist das erste Durchlaufloch 32 nahe der Stirnwand 26 angeordnet, welche im eingehängten Zustand der Schwadenrinne 14 die tiefere Seite der Schwadenrinne 14 ist. Das zweite Durchlaufloch 33 ist im mittleren Bereich angeordnet. Die Positionen und Größen der Durchlauflöcher 32, 33 sind so gewählt, dass eine möglichst gleichmäßige Benetzung der Schwadenrinnen 14 und eine möglichst effiziente Verdampfung des einfließenden Wassers erreicht wird.

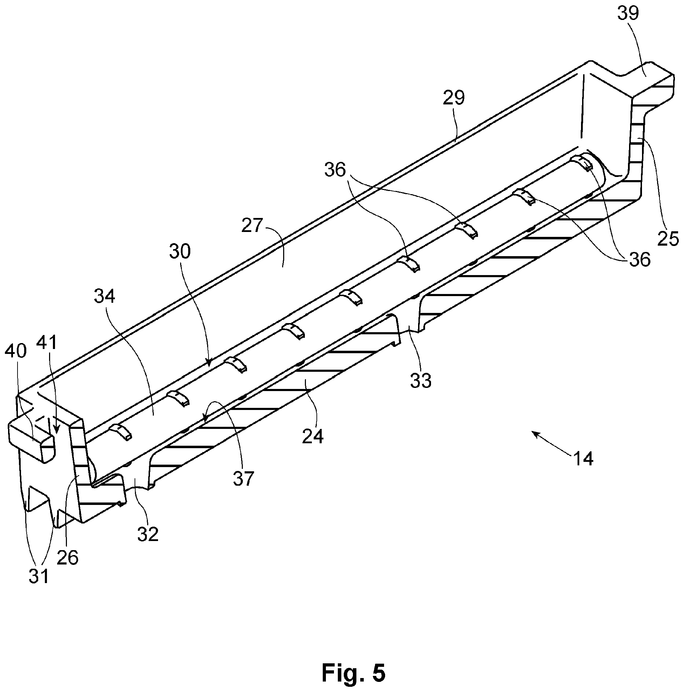

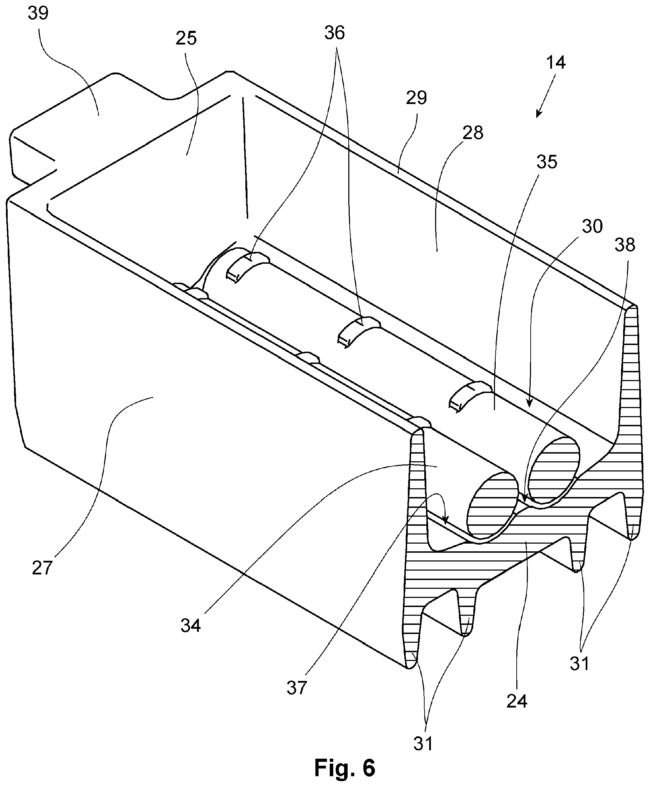

In der Fig. 5 und Fig. 6 ist zu erkennen, dass in der Schwadenrinne 14 zwei herausnehmbare Stahleinlagen 34, 35 angeordnet sind. Die Stahleinlagen 34, 35 und die wasserführende Fläche 30 der Schwadenrinne 14 sind geometrisch komplementär zueinander gewölbt, so dass die Stahleinlagen 34, 35 in vorgegebener Lage in die Schwadenrinne 14 einlegbar sind. Die Stahleinlagen 34, 35 sind als zylindrische Stäbe mit Noppen 36 ausgebildet; die wasserführende Fläche 30 des Bodens 24 weist dementsprechende längliche Vertiefungen 37, 38 auf. Wenn Wasser entlang der Schwadenrinne 14 fließt, werden die Stahleinlagen 34, 35 zumindest teilweise von dem Wasser umspült. Somit kann die in den Stahleinlagen 34, 35 gespeicherte Wärme effizient an das Wasser abgegeben werden. Die Stahleinlagen 34, 35 steigern die Verdampfungswirkung der Schwadenrinnen 14, da eine größere Fläche für den Wärmeübergang zur Verfügung steht und die thermische Masse erhöht ist. Während eines Beschwadungsvorgangs kann somit die Gesamtmenge verdampfenden Wassers vergrößert werden.

In den Fig. 4, Fig. 5 und Fig. 6 ist ferner zu erkennen, dass an den beiden Stirnwänden 25, 26 der in Draufsicht rechteckigen Schwadenrinne 14 ein schmales Befestigungselement 39 bzw. ein breites Befestigungselement 40 vorgesehen sind. Für eine bessere Unterscheidbarkeit ist das schmale Befestigungselement 39 massiv ausgebildet, wohingegen das breite Befestigungselement 40 einen vertikalen Durchbruch 41 aufweist. Die Befestigungselemente 39, 40 sind am oberen Rand 29 der Schwadenrinne 14 angeordnet und weisen in Form plattenartiger Abschnitte von den Stirnwänden 25, 26 ausgehend in voneinander entgegengesetzte Richtungen. Das breite Befestigungselement 40 ist an der Stirnwand 26 angeordnet, welche im eingehängten Zustand der Schwadenrinne 14 die tiefere Seite der Schwadenrinne 14 ist. Das schmale Befestigungselement 39 befindet sich an der höher gelegenen Stirnwand 25.

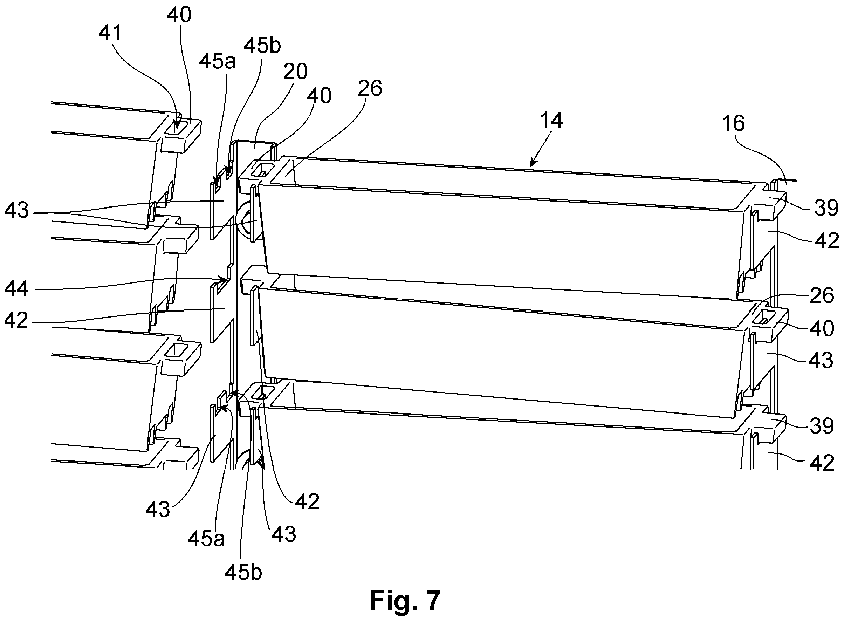

In Fig. 7 ist gezeigt, dass die Schwadenrinnen 14 über die beiden Befestigungselemente 39, 40 in zu den Befestigungselementen 39, 40 komplementäre Halteelemente 42, 43 der Haltevorrichtung 15 einsetzbar und herausnehmbar sind. Auf der linken Seite der Fig. 7 sind die Schwadenrinnen 14 von der Haltevorrichtung 15 gelöst dargestellt. Auf der rechten Seite der Fig. 7 sind die Befestigungselemente 39, 40 der Schwadenrinnen 14 in den Halteelementen 42, 43 der Haltevorrichtung 15 aufgenommen. Insbesondere auf der linken Seite der Fig. 7 ist zu erkennen, dass das Halteelement 42 als eine zu dem massiven, schmalen Befestigungselement 39 komplementäre Aussparung 44 mit ebener Auflagefläche gebildet ist. Das Halteelement 43 ist dagegen zu dem breiten Befestigungselement 40 komplementär ausgebildet und weist zwei kurze Aussparungen 45a, 45b in einem Abstand von der Mitte auf, wobei ein Vorsprung zwischen den beiden Aussparungen 45a, 45b in den Durchbruch 41 des breiten Befestigungselements 40 hineinragt. Die Halteelemente 42, 43 der Haltevorrichtung 15 sind über der Höhe der vertikalen Profile 16, 17, 20, 21 abwechselnd verteilt. Dabei liegen sich jeweils zwei einander zugeordnete Halteelemente 42, 43 gegenüber und sind vertikal leicht versetzt. Das dem breiten Befestigungselement 40 zugeordnete Halteelement 43 liegt immer etwas niedriger als das dem schmalen Befestigungselement 39 zugeordnete Halteelement 42. Das Wasser fließt folglich immer in die Richtung der Stirnwand 26 und folglich durch das an dieser Seite im Boden 24 eingebrachte erste Durchlaufloch 32. Das Einsetzen an einer vorbestimmten Position der Haltevorrichtung 15 ist durch die geometrisch unterschiedlich ausgebildeten Befestigungselemente 39, 40 und Halteelemente 42, 43 lediglich in einer einzigen, vorgegebenen Ausrichtung möglich.

Alternativ zu dem schrägen Aufhängen der Schwadenrinnen können diese auch eine vorgegebene Neigung der Bodenfläche aufweisen, welche die Wasserführungsfläche bildet. In diesem Fall befinden sich die beiden Halteelemente auf gleicher Höhe, der obere Rand der Schwadenrinne verläuft waagerecht aber die wasserführende Fläche ist zu dem Ende mit dem Durchlaufloch hin geneigt.

Die beiden nebeneinander liegenden untersten Schwadenrinnen können in beiden Ausführungsformen ohne Löcher hergestellt werden und müssen im eingehängten Zustand nicht über einen geneigten Boden 29 verfügen. In diesem Fall kann sich das eingebrachte Wasser, das nicht bereits an den darüberliegenden Schwadenrinnen 14 verdampft ist, darin sammeln. Es können aber auch bis zu den untersten Schwadenrinnen geneigte Böden 29 mit Durchlauflöchern 32, 33 vorgesehen sein, so dass sich das nicht verdampfte Wasser in Auffangwanne 19 sammelt.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 1: Gehäuse
- 2: Tür
- 3: Bedienfeld
- 4: Backraum
- 5: Gebläse
- 6: Deckwand
- 7: Heizregister
- 8: Brenner
- 9: Zufuhrkanal
- 10: Trennwand
- 11: Wärmespeicherelement
- 12: Rückwand
- 13: Schwadenapparat
- 14: Wärmeübertragungselemente, Schwadenrinnen
- 15: Haltevorrichtung
- 16: erstes äußeres vertikales Profil
- 17: zweites äußeres vertikales Profil
- 18: Einlaufrinne
- 19: Auffangwanne
- 20: erstes inneres vertikales Profil
- 21: zweites inneres vertikales Profil
- 22: erste Wasseraustrittsöffnung
- 23: zweite Wasseraustrittsöffnung
- 24: Boden der Schwadenrinne
- 25: Erste Stirnwand
- 26: Zweite Stirnwand
- 27: Erste Seitenwand
- 28: Zweite Seitenwand
- 29: Oberer Rand
- 30: Wasserführende Fläche
- 31: Extrusionen, Rippen
- 32: Erstes Durchlaufloch
- 33: Zweites Durchlaufloch
- 34: Erste Stahleinlage
- 35: Zweite Stahleinlage
- 36: Noppen der Stahleinlage
- 37: Erste längliche Vertiefung
- 38: Zweite längliche Vertiefung
- 39: Schmales Befestigungselement
- 40: Breites Befestigungselement
- 41: Durchbruch im breiten Befestigungselement
- 42: Schmalem Befestigungselement zugeordnetes Halteelement
- 43: Breitem Befestigungselement zugeordnetes Halteelement
- 44: Aussparung mit ebener Auflagefläche
- 45a, 45b: kurze Aussparungen

## Patentansprüche

1. Gargerät mit
- mindestens einer Wasserzufuhrvorrichtung,
- einer Mehrzahl von übereinander angeordneten, wasserführenden Wärmeübertragungselementen (14), die eine wasserführende Fläche (30) und jeweils mindestens ein Durchlaufloch (32, 33) in der wasserführenden Fläche (30) für den Durchtritt von Wasser zu einem darunterliegenden Wärmeübertragungselement (14) aufweisen,
- und mindestens einer Haltevorrichtung (15) zur lösbaren Befestigung der Wärmeübertragungselemente (14) im Gargerät,
**dadurch gekennzeichnet, dass**
zumindest mehrere Wärmeübertragungselemente (14) eine vorgegebene Ausrichtung aufweisen und die Geometrie der Wärmeübertragungselemente (14) auf die Geometrie im Bereich der Haltevorrichtung (15) derart abgestimmt ist, dass jedes dieser Wärmeübertragungselemente (14) nur in der vorgegebenen Ausrichtung im Gargerät befestigbar ist.

2. Gargerät nach Anspruch 1, **dadurch gekennzeichnet, dass** die mindestens eine Haltevorrichtung (15) Halteelemente (42, 43) aufweist, an denen Befestigungselemente (39, 40) der Wärmeübertragungselemente (14) befestigbar sind, wobei die Halteelemente (42, 43) und die Befestigungselemente (39, 40) in nur der vorgegebenen Ausrichtung der Wärmeübertragungselemente (14) verbindbar sind.

3. Gargerät nach Anspruch 1 oder 2, **dadurch gekennzeichnet, dass** die wasserführende Fläche (30) der an der Haltevorrichtung (15) befestigten Wärmeübertragungselemente (14) eine vorgegebene Neigung aufweist.

4. Gargerät nach einem der Ansprüche 1 bis 3, **dadurch gekennzeichnet, dass** die Ausrichtung der übereinander angeordneten Wärmeübergangselemente (14) und die Neigungsrichtung der wasserführenden Flächen (30) alternierend ist.

5. Gargerät nach einem der Ansprüche 1 bis 4, **dadurch gekennzeichnet, dass** die Wärmeübertragungselemente (14) als Schwadenrinnen (14) ausgebildet sind.

6. Gargerät nach Anspruch 5, **dadurch gekennzeichnet, dass** die Schwadenrinnen (14) mindestens eins der folgenden Merkmale aufweist:
- sie ist ein Metallgussteil;
- sie ist ein Strangpressteil;
- sie weist mindestens eine darin einlegbare und herausnehmbare Einlage (34, 35) auf.

7. Gargerät nach Anspruch 6, **dadurch gekennzeichnet, dass** die wasserführende Innenseite der Metallgussteile und die Einlagen (34, 35) geometrisch komplementär zueinander ausgebildet sind, so dass die Einlagen (34, 35) in vorgegebener Lage in die Metallgussteile einlegbar sind.

8. Gargerät nach einem der Ansprüche 1 bis 7, **dadurch gekennzeichnet, dass** an einer nicht wasserführenden Seite der Wärmeübertragungselemente (14) Extrusionen (31) zum schnellen Aufheizen der Wärmeübertragungselemente (14) vorgesehen sind.

9. Gargerät nach einem der Ansprüche 1 bis 8, **dadurch gekennzeichnet, dass** die Wärmeübertragungselemente (14) jeweils mehrere Durchlauflöcher (32, 33) aufweisen.

10. Gargerät nach Anspruch 9, **dadurch gekennzeichnet, dass** der Durchmesser der Durchlauflöcher (32, 33) innerhalb eines jeden Wärmeübertragungselementes (14) auf die Anzahl und die Position der Durchlauflöcher (32, 33) abgestimmt ist.
